# EUROPEAN PATENT APPLICATION

(11) **EP 2 750 113 A1**
(43) Date of publication of application: **02.07.2014**
(21) Application number: 12826065.0
(22) Date of filing: 04.07.2012
(51) Int. Cl.: G07F 19/00, G07C 11/00

(54) **SELF-TRANSACTION AUTOMATIC OPTIMIZATION SERVICE CONTROL SYSTEM**

(30) Priority: 23.08.2011 CN 201110243205
(71) Applicant: GRG Banking Equipment Co., Ltd., Guangzhou, Guangdong 510663 (CN)
(72) Inventor: XIE, Fei, Guangzhou Guangdong 510663 (CN); WANG, Qinghua, Guangzhou Guangdong 510663 (CN); CHEN, Yunpei, Guangzhou Guangdong 510663 (CN); XIE, Xingfeng, Guangzhou Guangdong 510663 (CN); TAO, Pinde, Guangzhou Guangdong 510663 (CN)
(74) Representative: Maiwald Patentanwalts GmbH
(86) International application number: PCT/CN2012/078147
(87) International publication number: WO 2013/026328

(57) **Abstract**

An self-transaction automatic optimization service control system comprises a time division slicing service mode generation module (10), a service interruption signal generation module (20), and a self-service terminal control module (30). The time division slicing service mode generation module (10) is configured to detect a current user queue of a self-service terminal, to identify whether the user queue is in a long queue state, if yes, switch the self-service terminal from a common service mode to a time division slicing service mode, and otherwise, maintain the common service mode of the self-service terminal, the time division slicing service mode providing a current operating user of the self-service terminal with a service of a specific duration or specific times of services. The service interruption signal generation module (20) is configured to detect whether the specific duration or the specific times set in the time division slicing service mode are reached, and if yes, send a service interruption signal. The self-service terminal control module (30) is configured to detect and receive the service interruption signal and control, according to the service interruption signal, a blank card of the current operating user to exit the self-service terminal, so as to end the transaction.

## Description

This application claims priority to Chinese Patent Application No. 201110243205.9, titled "SELF-SERVICE TRANSACTION AUTOMATIC OPTIMIZATION SERVICE CONTROL SYSTEM" and filed with the state Intellectual Property Office on August 23, 2011, which is incorporated herein by reference in its entirety.

### FIELD OF THE INVENTION

The invention relates to the field of financial technology, and particularly to a self-service transaction automatic optimization service control system based on long queue waiting of users.

### BACKGROUND OF THE INVENTION

With the development of financial computerization in China, financial self-service transaction has gradually become a main service approach of financial institutions for customers. However, with the wide range of applications of financial self-service terminals, security issues of financial self-service terminals are becoming more apparent, which have led to widespread concerns in society. Therefore, prevention of financial self-service transaction crimes has become a global issue.

The popularity of self-service financial equipments has brought great convenience to people's lives, however, for some bustling districts in a city in which an inch of land worth an inch of gold, the limited quantity of the self-service financial equipments are often difficult to meet people's needs. Especially in China, the distribution quantity of the self-service financial equipments is about 160 per million people, which is less than one-third of the global average distribution quantity. The phenomenon of a long queue waiting for service in front of a self-service financial equipment is common. When queuing in front of a self-service financial equipment, due to some reasons such as environment, it is usually difficult for people to endure long time waiting.

To take full advantage of the limited self-service financial equipment resources and improve satisfaction of the user with overall service of the self-financial equipment, under the current environment with shortage of self-service financial equipments, it is necessary to standardize the service order of self-service financial equipment by means of technical means, so as to create an impartial and harmonious service environment of self-service financial equipment, this is also in accordance with the interests of the vast majority of cardholders.

### SUMMARY OF THE INVENTION

The invention provides a self-service transaction automatic optimization service control system to detect the current user queue of a self-service terminal and automatically convert the service mode of the self-service terminal between a general service mode and a time-slicing service mode according to the status of length of the queue, so as to allocate service resources effectively.

The self-service transaction automatic optimization service control system provided by the invention includes:

a time-slicing service mode generating module, configured to detect the current user queue of a self-service terminal, identify whether the user queue is in a long queue state, convert the self-service terminal from a general service mode to a time-slicing service mode if the user queue is in a long queue state, otherwise maintain the self-service terminal in the general service mode if the queue is not in the long queue state, wherein the time-slicing service mode provides business service of specific time or specific number of times to the user currently in operation of the self-service terminal;

a service interrupting signal generating module, configured to detect whether the specific time or the specific number of times set in the time-slicing service mode is reached and send a service interrupting signal if it is reached; and

a self-service terminal control module, configured to detect and receive the service interrupting signal, and control, according to the service interrupting signal, the self-service terminal to eject the bank card of the user currently in operation so as to end the transaction.

The self-service transaction automatic optimization service control system provided by the invention adopts the time-slicing service mode generating module to detect the current user queue of the self-service terminal and can automatically perform the service mode conversion of the self-service terminal between the general service mode and the time-slicing service mode according to the status of length of the queue. For example, when it is detected that the user queue is in a long queue state, the service mode of the self-service terminal is converted from the general service mode to the time-slicing service mode; after entering the time-slicing service mode, the self-service terminal service is divided relatively uniformly into multiple service sections by using the service slicing technique and based on the time or the number of times of businesses (including the number of times of business cycles and the number of times of user card cycles), and business service of specific time or/and number of times is/are set for the user currently in operation of the self-service terminal; when reaching of the specific time or the specific number of times is detected by the service interrupting signal generating module, a service interrupting signal is sent to the self-service terminal control module to eject the bank card of the user currently in operation, so as to end the transaction.

Compared with the prior art, the implementation of the invention has the following benefits: firstly, quantization control and management are executed technically, and the control and management of the self-service terminal service can be achieved according to the change of the service environment; secondly, automatic estimation and identification of the service requirements in the service environment by the self-service terminal system is achieved, and standardized management is made to the long queue service, thereby the foundation for the self-service terminal service automatic optimization technique is laid; and estimation is made to the matching between the service requirement of the self-service terminal and the service recourses of the self-service terminal thereby efficient allocation of the service resources is achieved.

### BRIEF DESCRIPTION OF THE DRAWINGS

Figure 1 is a schematically structural diagram of a self-service transaction automatic optimization service control system provided by the invention;
Figure 2 is a schematically structural diagram of a time-slicing service mode generating module shown in Figure 1;
Figure 3 is a schematically structural diagram of a first embodiment of a service interrupting signal generating module provided by the invention;
Figure 4 is a schematically structural diagram of a face change signal detecting unit shown in Figure 3;
Figure 5 is a schematically structural diagram of a second embodiment of the service interrupting signal generating module provided by the invention;
Figure 6 is a schematically structural diagram of a third embodiment of the service interrupting signal generating module provided by the invention; and
Figure 7 is a flow chart showing business processing by the self-service transaction automatic optimization service control system provided by the invention which is applied in a self-service terminal control system of the prior art.

### DETAILED DESCRIPTION OF THE INVENTION

The technical solutions in embodiments of the invention will be further described clearly and fully hereinafter in conjunction with drawings in the embodiments of the invention. Apparently, the embodiments described are only a part of embodiments of the invention, rather than all of the embodiments. Other embodiments obtained based on the embodiments in the invention by those skilled in the art without any creative work all belong to the scope of protection of the invention.

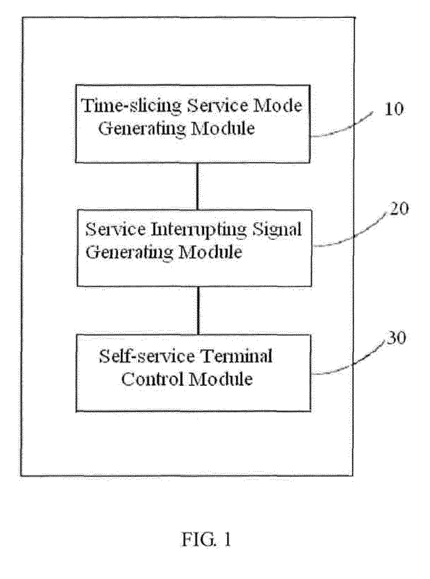

Referring to Figure 1, Figure 1 is a schematically structural diagram of a self-service transaction automatic optimization service control system provided by the invention. In the embodiment, the self-service transaction automatic optimization service control system detects the current user queue of a self-service terminal and converts the service mode of the self-service terminal to a time-slicing service mode when it is identified that the user queue is in a long queue state, wherein the time-slicing service mode provides business service of specific time or/and number of times to the user currently in operation of the self-service terminal. The control system includes:
a time-slicing service mode generating module 10, configured to detect the current user queue of the self-service terminal and identify whether the user queue is in a long queue state, convert the self-service terminal from a general service mode to a time-slicing service mode if the user queue is in a long queue state, otherwise maintain the self-service terminal in a general service mode if the queue is not in the long queue state, wherein the time-slicing service mode provides business service of specific time or/and number of times to the user currently in operation of the self-service terminal;
a service interrupting signal generating module 20, configured to detect whether the specific time or number of times set in the time-slicing service mode is reached, and send a service interrupting signal if it is reached; and
a self-service terminal control module 30, configured to detect and receive the service interrupting signal, and control, according to the service interrupting signal, the self-service terminal to eject the bank card of the user currently in operation so as to end the transaction.

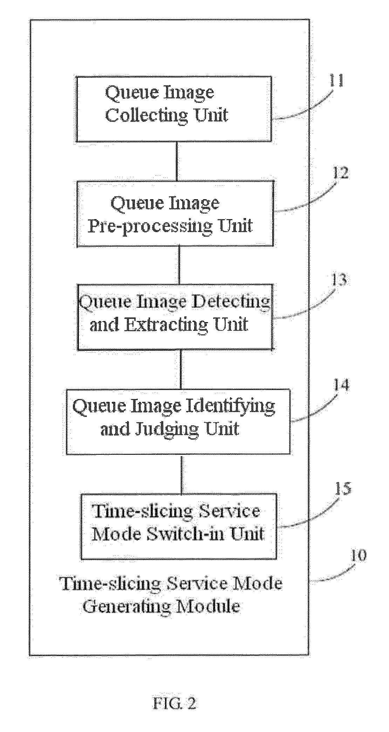

Wherein, referring to Figure 2, the time-slicing service mode generating module 10 includes:
a queue image collecting unit 11, configured to collect, from a camera video, a frame of image about the current user queue of the self-service terminal every 300ms;
a queue image pre-processing unit 12, configured to perform definition filtering processing on the collected image;
a queue image detecting and extracting unit 13, configured to perform feature extraction to a feature region of the image obtained after the definition filtering processing, for extracting a user queue image;
a queue image identifying and judging unit 14, configured to identify the extracted user queue image, estimate the length of the queue in the user queue image, and judge that the queue is in a long queue state when the length of the queue is greater than or equal to 3; and
a time-slicing service mode switch-in unit 15, configured to convert the self-service terminal from the general service mode to the time-slicing service mode if the queue image identifying and judging unit judges that the queue is in the long queue state, otherwise maintain the self-service terminal in the general service mode if the queue is not in the long queue state, wherein in specific implementation, the time-slicing service mode switch-in unit 15 sends different service time-division signals to inform the judgment made about the queue state, for example, if the queue is a long queue, the service time-division signal is set to be 1; otherwise, a clock reaching signal is set to be 0.

In specific implementation, the self-service transaction automatic optimization service control system provided by the embodiment of the invention can be applied in a self-service terminal, such as an ATM (Automatic Teller Machine, ATM for short), to detect the current user queue of the self-service terminal and convert the service mode of the self-service terminal from the general service mode to the time-slicing service mode when it is identified that the user queue is in a long queue state (such as more than or equal to 3 people); after entering the time-slicing service mode, the time-slicing service mode provides business service of specific time or/and number of times to the user currently in operation of the self-service terminal, when reaching of the specific time or the specific number of times is detected, a service interrupting signal is sent to control the self-service terminal to eject the bank card of the user currently in operation, so as to end the transaction. In this way, in the case of a long queue user waiting state, the service time for each user can be restricted, so as to allocate the service resources effectively.

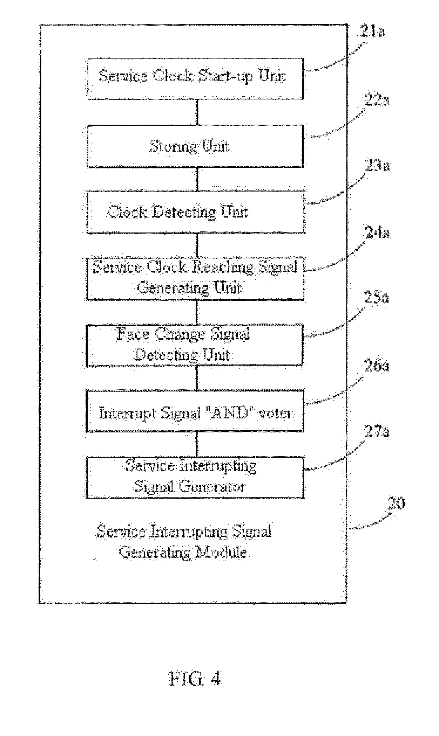

Referring to Figure 4, Figure 4 is a schematically structural diagram of a first embodiment of the service interrupting signal generating module 20 provided by the invention. The service interrupting signal generating module 20 includes:
a service clock start-up unit 21 a, configured to, when entering the time-slicing service mode, start up a time-slicing service clock to start counting of the service time;
a storing unit 22a, configured to store the value set for the specific time of business service;
a clock detecting unit 23a, configured to detect the service time counted by the service clock start-up unit every time when execution of a business is completed in the self-service terminal; and
a service clock reaching signal generating unit 24a, configured to send a service interrupting signal to control the self-service terminal to eject the bank card of the user currently in operation so as to end the transaction when the clock detecting unit detects that the service time is greater than or equal to the specific time, wherein in specific implementation, the service clock reaching signal generating unit 24a sends different service clock reaching signals to inform the detection result, for example, if the service time detected by the clock detecting unit is greater than or equal to the specific time, the service clock reaching signal is set to be 1, otherwise, the service clock reaching signal is set to be 0; and
a face change signal detecting unit 25a, configured to, before reaching the specific time, send a re-timing signal to the service clock start-up unit periodically, or at the time when card insertion to the self-service terminal is detected and the user currently in operation of the self-service terminal is detected and identified to be different from the user in operation detected last time; and configured to, after the transaction ends, send a re-timing signal to the service clock start-up unit when card insertion to the self-service terminal is detected and the user currently in operation of the self-service terminal is detected and identified to be different from the user in operation detected last time, otherwise send a refusing signal to the self-service terminal to refuse accepting the bank card of the user currently in operation.

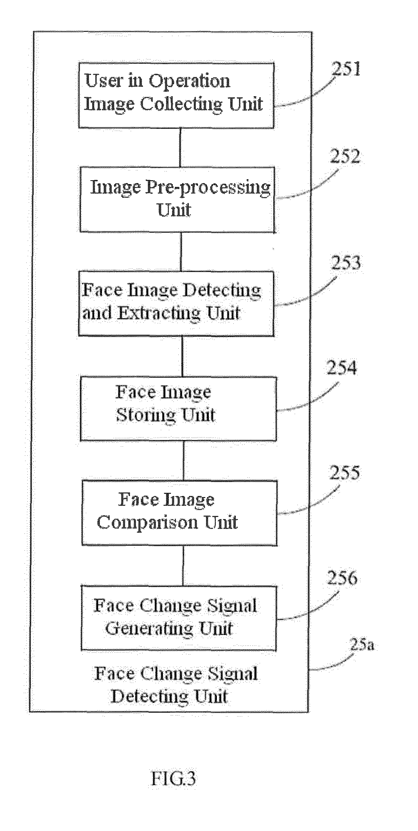

Furthermore, referring to Figure 3, the face change signal detecting unit 25a includes:
an user in operation image collecting unit 251, configured to collect, from a camera video, a frame of image about the user currently in operation of the self-service terminal every 300ms or when it is detected that a card is inserted into the self-service terminal;
an image pre-processing unit 252, configured to perform definition filtering processing on the collected image;
a face image detecting and extracting unit 253, configured to perform feature extraction to a feature region of the image obtained after the definition filtering processing, for extracting a face image;
a face image storing unit 254, configured to store the face image as a reference for comparison with an currently extracted face image;
a face image comparison unit 255, configured to compare the extracted face image of the user currently in operation with the face image stored the last time so as to judge whether they are the same person; and
a face change signal generating unit 256, configured to generate a face change signal and send the face change signal to a related unit when the face image comparison unit judges that they are not the same person. In specific implementation, the face change signal generating unit 256 sends different face change signals to inform the identification result, for example, if they are the same person, the face change signal is set to be 1; otherwise, the face change signal is set to be 0.

In addition, in specific implementation, the service interrupting signal generating module provided by the invention can be added with a service interrupting signal generator 27a, and the service interrupting signal generator 27a is connected respectively with the time-slicing service mode cutting-in unit 15, the face change signal generating unit 256 and the service clock arrival signal generating unit 24a via an interrupt signal "AND" voter 26a, therefore, the service interrupting signal is a combination result of the face change signal, the service time-division signal and the service clock reaching signal and is obtained by the calculation of the interrupt signal "AND" voter 26a. Specifically, only when the face change signal is 0 and the service time-division signal is 1 and the service clock reaching signal is 1 will the result of the service interrupting signal be 1, i.e. outputting outwardly the service interrupting signal to inform the self-service terminal control module to interrupt the service, forcing the user currently in operation to quit the using of the self-service terminal after completing the current business, otherwise, the self-service terminal will not accept the service for the user in operation, thereby realizing the time-division service of the self-service transaction automatic optimization control system. When the face change signal, the service time-division signal and the service clock reaching signal are not in a (0,1,1) state at the same time, it indicates that the user currently in operation does not exceed the predetermined service time, and can continue enjoying the service.

The self-service transaction automatic optimization service control system in the embodiment performs as followed: detecting the current user queue of the self-service terminal and converting the self-service terminal into the time-slicing service mode when it is identified that the user queue is in a long queue state, wherein the time-slicing service mode provides business service of specific time to the user currently in operation of the self-service terminal. The specific operating process of the embodiment is described hereinafter, which includes the following steps.
1. Detecting the current user queue of the self-service terminal and identifying whether the user queue is in a long queue state, wherein if the user queue is in a long queue state, converting the service mode of the self-service terminal from a general service mode to a time-slicing service mode which provides business service of specific time to the user currently in operation, otherwise, the self-service terminal maintains the general service mode;
   wherein, the process for detecting the current user queue of the self-service terminal to implement the conversion of the service mode of the self-service terminal includes:
   (1) collecting, by the queue image collecting unit 11, a frame of image about the current user queue of the self-service terminal from a camera video every 300ms;
      wherein, in the specific implementation, a camera device records the video about the user queue in front of the self-service terminal, the queue image collecting unit 11 collects a frame of image from the video every 300ms. The video camera is used to monitor the user queue, and the queue identification technique adopted in the embodiment is based on a head identification technique, therefore, the queue camera should be in a look-down shooting angle, thereby the image obtained by it can facilitate identifying the head.
   (2) performing, by the queue image pre-processing unit 12, definition filtering processing to the collected image;
      Wherein, in specific implementation, the queue image pre-processing unit 12 performs definition filtering processing to the acquired image, discards indistinct images and leaves distinct images for further processing, wherein the definition processing is a known technique, which will not be described in detail herein;
   (3) performing, by the queue image detecting and extracting unit 13, feature extraction to a feature region of the images obtained after the definition filtering processing, for extracting a user queue image;
   (4) identifying, by the queue image identifying and judging unit 14, the extracted user queue image and estimating the length of the queue in the user queue image, wherein if the length of the queue is greater than or equal to 3, it is judged that the queue is in a long queue state; otherwise, it is judged that the queue is in a short queue state (including a no-queue state);
      a head identification algorithm which is a mature technology is adopted in the embodiment to implement the queue identification algorithm;
   (5) converting, by the time-slicing service mode switch-in unit 15, the self-service terminal from the general service mode to the time-slicing service mode if it is judged that the queue is in a long queue state, otherwise maintain the self-service terminal in the general service mode. In a specific implementation, the time-slicing service mode switch-in unit 15 sends different service time-division signals to inform the judgment about the queue state, for example, when the queue is a long queue, the service time-division signal is set to be 1; otherwise, the clock reaching signal is set to be 0.
   Also, after entering the time-slicing service mode, keeping on the detection of the current user queue of the self-service terminal the same flow in the embodiment of the invention is also employed, and only when it is judged that the queue is in a short queue state will a control signal be sent for converting the service mode of the self-service terminal from the time-slicing service mode to the general service mode.
2. Starting up the service clock start-up unit 21a immediately to start to count the service time when entering the time-slicing service mode, and detecting, by the clock detecting unit 23a, the service time every time when execution of a business is completed in the self-service terminal;
3. Before reaching the specific time, the face change signal detecting unit 25a zero clearing the time-slicing service clock periodically or when card insertion to the self-service terminal is detected and the user currently in operation of the self-service terminal is detected and identified to be different from the user in operation detected last time; otherwise, the time-slicing service clock continues timing;
4. Sending, by the service clock reaching signal generating unit 24a, a service interrupting signal to control the self-service terminal to eject the bank card of the user currently in operation so as to end the transaction when the clock detecting unit 23a detects that the service time is greater than or equal to the specific time; and
5. After the transaction ends, when card insertion to the self-service terminal is detected and the user currently in operation of the self-service terminal is detected and identified by the face change signal detecting unit 25a to be different from the user in operation detected last time, the bank card of the user currently in operation is accepted for transaction and the time-slicing service clock is zero cleared for re-timing; otherwise, the bank card of the user currently in operation is refused to be accepted.

In the embodiment of the invention, before reaching the specific time, it is required for the face change signal detecting unit 25a to detect and identify the user currently in operation of the self-service terminal periodically or when a card insertion to the self-service terminal is detected, and after the transaction ends, it is also required for the face change signal detecting unit 25a to detect and identify the user currently in operation of the self-service terminal when a card insertion to the self-service terminal is detected, wherein the process for detecting and identifying the user currently in operation of the self-service terminal by the face change signal detecting unit 25a includes the following steps:
(1) collecting, by the user in operation image collecting unit 251, a frame of image about the user currently in operation of the self-service terminal from a camera video every every 300ms or when a card insertion to the self-service terminal is detected;
   wherein in specific implementation, another camera device records the video about an user in operation in front of the self-service terminal a frame of image is collected from the video by the user in operation image acquiring unit 251 which collects a frame of image every 300ms. The video camera is used to monitor the user in operation of the self-service terminal, and the user in operation identification technique adopted in the embodiment is based on a face identification technique, therefore, the camera should be in a front shooting angle, so that the image obtained by the camera can facilitate capturing the face of a person.
(2) performing, by the image pre-processing unit 252, definition filtering processing on the acquired image;
   wherein in specific implementation, the image pre-processing unit 252 performs definition filtering processing to the collected image, discards indistinct images and leaves distinct images for further processing, wherein the definition processing is a known technique, which will not be described in detail herein.
(3) performing, by the face image detecting and extracting unit 253, feature extraction to a feature region of the image obtained after the definition filtering processing for extracting a face image;
(4) comparing, by the face image comparison unit 255, the extracted face image of the user currently in operation with the face image stored by the face image storing unit 254 the last time, so as to identify whether the user currently in operation and the user in operation detected the last time are the same person; and
(5) sending, by the face change signal generating unit 256, different face change signals to inform the identification result, for example, if the above two users are the same person, the face change signal is set to be 1, otherwise, the face change signal is set to be 0.

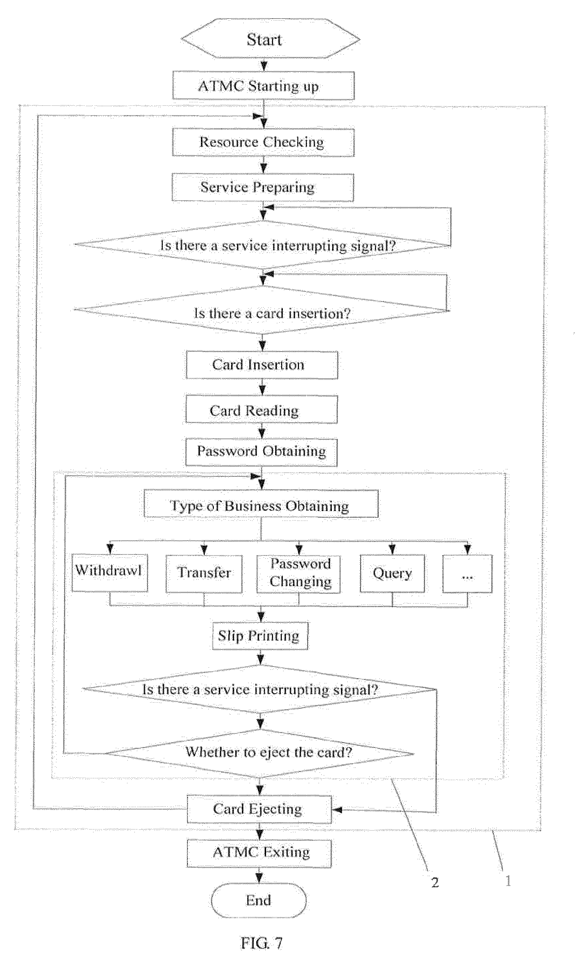

The time-slicing service technique adopted by the time-slicing service mode in the embodiment of the invention is a kind of technique which is based on the following characteristics: the control procedure task of the self-service terminal control system is divided into multiple businesses (one-time execution of a business application cycle body, such as withdrawal, deposit, transfer) and each business is divided into multiple processes (middleware-driven standard interfaces, such as card insertion, banknote stacking, banknote delivery, detecting whether the banknote has been taken away by a user), by monitoring and analyzing the user queue of the self-service terminal and the user in operation of the self-service terminal in real time, the user in operation of the self-service terminal is monitored and managed automatically so as to achieve the optimization of the self-service terminal service. Therefore, slicing is made to the self-service terminal control system service, in order to ensure the integrity of business, a slicing unit is one time operation of a self-service terminal service cycle body, in brief, when entering the time-slicing service mode, the time-slicing service clock is started up to start counting of the service time, and the service time is detected every time when execution of a business is completed in the self-service terminal, in this way, based on the atomicity of the business process interface of the self-service terminal control system, the moment for detecting and querying a clock can be the moment when execution of each process interface (middleware-driven function interface) is completed, but only when it is detected that the service time is greater than or equal to the specific time, a service interrupting signal is sent to control the self-service terminal to eject the bank card of the user currently in operation, so as to end the transaction, thereby ensuring the integrity of each business operation of each user in operation. In the following, the process of business processing of the self-service transaction automatic optimization service control system provided by the invention which is applied in a self-service terminal (ATM) control system of the prior art is described specifically with reference to Figure 7.

As shown in Figure 7, an existing self-service terminal control system technology is shown, a self-service terminal control system procedure includes two cycles, a user card cycle 1 (i.e. after a card is inserted, all business operations are completed on the user cycle body based on the card operation, ejecting the card is the existing of the user card cycle) and a business cycle 2 (after a card is inserted, after performing a withdrawal operation, a query operation and a transfer operation are performed. In this process, withdrawal, query, transfer forms a one-level lower cycle nested in the user cycle, and is called a business cycle; for a business cycle executing body, cycling one time is executing business one time, the task is divided into multiple businesses, such as withdrawal, deposit, transfer or other businesses, each business is divided into multiple processes, the process refers to a middleware-driven standard interface, such as card insertion, banknote stacking, banknote delivering, detecting whether the banknote has been taken away by the user), the user in operation of the self-service terminal can enjoy the service of the self-service terminal control system endlessly without any limitation, and the user in operation can occupy and operate the self-service terminal machine continuously unless the operator quits voluntarily. After the user in operation has finished the operations for one card, the user in operation can continue operating by using another card or inserting the same card again. If the user in operation has multiple cards required to perform business transactions, the user in operation may occupy the self-service terminal machine for a very long time, which will affect greatly a person waiting for service in a long queue. This process is also referred to as a general service mode of the self-service terminal.

However, the self-service transaction automatic optimization service control system provided by the invention is based on existing self-service terminal control system technique, with a time-slicing service mode being added to the latter, and mode conversion is performed automatically according to external environmental factors (user queue state), when the queue in a long queue state, the service mode is converted to the time-slicing service mode automatically. In the time-slicing service mode, the endless service of the self-service terminal is separated into multiple service sections, and the service slicing of the self-service terminal control system is based on the technique for controlling the user card cycle and the business cycle of the self-service financial equipment control system, the integrity of the business is also an requirement, and exit conditions of the two loops are well designed. In this way, the continuous service of the self-service financial equipment is relatively uniformly divided into multiple service sections, so as to achieve the effect of service slicing, one service section satisfies one customer, thereby achieving fair services. Firstly, it should prevent a long time occupation of service by multi-card operation of a user, and secondly, it should prevent a long time occupation of service by one-card multi-business operation. Wherein, the service slicing is classified into user slicing and card slicing, the card slicing is based on counting or timing based on the business cycle, wherein the system only allows one bank card to enjoy business service of specific time or specific number of times of cycles. Correspondingly, the user slicing is mainly based on technique or timing of the user card cycle, wherein during one service process the system only allows a user to enjoy the card operation service of specific time or specific number of times of user card cycles.

The self-service transaction automatic optimization service control system provided by the invention combines the two service slicing techniques in application: firstly, for the service slicing, it needs to design a service clock (or a period of the number of times of businesses) for service timing. A service period refers to the longest service time assigned to a one-time service for each user of self-service terminal by the system, so as to urge the user to complete required self-service terminal service in one service period as soon as possible, otherwise, the self-service financial equipment business will not be completed in a service period, as to the uncompleted business, the self-service terminal will refuse it due to the service time-out, the user of the self-service financial equipment will need to re-queue and wait.

The service period can be set based on statistical calculation according to a large number of historical business data of the self-service financial equipment machine, for example, according to statistics, only one thousandth of customers use the self-service financial equipment for more than three minutes in one service, or the probability that the service time exceeds 5 minutes in one service is one in ten thousandth. It can be set according to actual situations. In detail but without loss of generality, assuming that the service period is 3 minutes, when a user inserts a card and begins accepting service, if the detected face of the user in operation is different from the face image detected the last time when a card insertion is detected, the system considers that the user in operation changes, a new user in operation has come to accept service, and the service clock is zero cleared for timing. Through the face identification and service clock accumulation, the service time of the user in operation of the self-service financial equipment can be controlled, thereby achieving effective control of the user card cycle which is a big cycle, and achieving the purpose of service slicing substantially.

Furthermore, although the effective control of the user card cycle which is a big cycle is achieved, the integrity of the business for a user is not ensured. This is because the detection of clock period can be executed when the execution of a functional interface by the self-service financial equipment control system has not been finished. That is to say, when a service clock period is reached and the self-service terminal control system obtains a service clock interrupt signal, the self-service terminal control system should not interrupt immediately the business which is being executed, it should be ensured that the execution of the current business is completed, that is to say, only when the execution of the business is completed can the cycle be exited. Therefore, when the self-service financial equipment control system detects the business clock, the optimum time for querying the business clock interrupting signal may be set at the end of the business cycle, i.e. at the time when a business is finished, and also it can be achieved at the time with the minimum granularity, i.e. at the time when the execution of each business process interface is finished. In this way, when any business is finished, only when it is detected that the service time is greater than or equal to the specific time will a service interrupting signal be sent to control the self-service terminal to eject the bank card of the user currently in operation, so as to end the transaction, thereby the integrity for each business operation of each user in operation is ensured.

Therefore, based on the two cycles of the self-service terminal control system procedure, a time-division technique based on service slices is proposed for the self-service terminal control system. In the two cycle in the flow chart, service interruptions are designed, so as to achieve the idea of separating the self-service terminal control system service into sections.

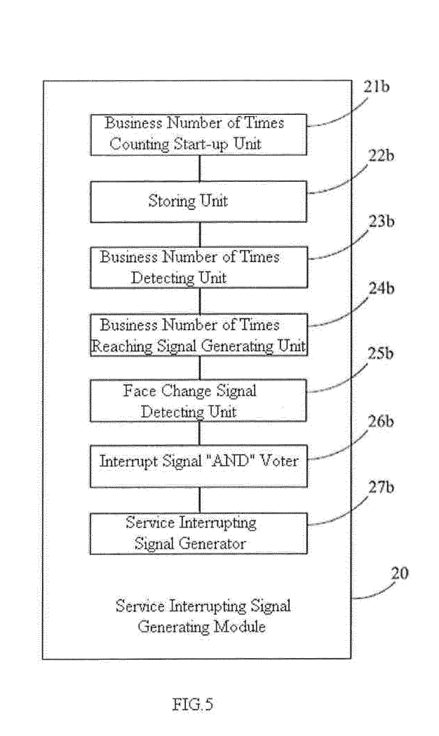

Referring to Figure 5, Figure 5 is schematically structural diagram of a second embodiment of the service interrupting signal generating module provided by the invention. The service interrupting signal generating module 20 includes:
a business number of times counting start-up unit 2 1 b, configured to, when entering the time-slicing service mode, start up the time-slicing service number of times counting to start counting the number of times of businesses;
a storing unit 22b, configured to store the value set for the specific number of times of business services ;
a business number of times detecting unit 23b, configured to detect the number of times of businesses in the business number of times counting start-up unit every time when execution of a business is completed in the self-service terminal;
a business number reaching signal generating unit 24b, configured to send a service interrupting signal to control the self-service terminal to eject the bank card of the user currently in operation so as to end the transaction when the business number of times detecting unit detects that the number of times of businesses is equal to the specific number of times; wherein in specific implementation, the business number reaching signal generating unit 24b sends different business number of times reaching signals to inform the detection result, for example, when the business number of times detecting unit 23b detects that the number of times of the businesses is equal to the specific number of times, the business number of times reaching signal is set to be 1, otherwise, the business number of times reaching signal is set to be 0; and
a face change signal detecting unit 25b, configured to, before reaching the specific number of times, send a re-counting signal to the business number of times counting start-up unit periodically, or at the time when card insertion to the self-service terminal is detected and the user currently in operation of the self-service terminal is detected and identified to be different from the user in operation detected last time; and configured to, after the transaction ends, send a re-counting signal to the business number of times counting start-up unit at the time when card insertion to the self-service terminal is detected and the user currently in operation of the self-service terminal is detected and identified to be different from the user in operation detected last time; otherwise send a refusing signal to the self-service terminal to refuse accepting the bank card of the user currently in operation.

Wherein, the structural frame of the face change signal detecting unit 25b is substantially the same as that of the face change signal detecting unit 25a in the above embodiment.

In addition, in specific implementation, the service interrupting signal generating module provided by the invention can be added with a service interrupting signal generator 27b, and the service interrupting signal generator 27b is connected respectively with the time-slicing service mode switch-in unit 15, the face change signal generating unit 256 and the business number of times reaching signal generating unit 24b via an interrupt signal "AND" voter 26b, therefore, the service interrupting signal is a combination result of the face change signal, the service time-division signal and the business number of times reaching signal and is obtained from the calculation by the interrupt signal "AND" voter 27a . Specifically, only when the face change signal is 0 and the service time-division signal is 1 and the business number of times reaching signal is 1 will the result of the service interrupting signal be 1, i.e. outputting the service interrupting signal to inform the self-service terminal control module to interrupt the service, forcing the user currently in operation to quit the using of the self-service terminal after completing the current business, otherwise the self-service terminal will not provide service for the user in operation, thereby the time-division service of the self-service transaction automatic optimization control system is achieved. When the face change signal, the service time-division signal and the business number of times reaching signal are not in a (0,1,1) state at the same time, it indicates that the operation of the user currently in operation does not exceed the predetermined number of times of businesses, the user in operation can continue enjoying the service.

The self-service transaction automatic optimization service control system provided in the embodiment performs as followed: detecting the current user queue of the self-service terminal and converting the self-service terminal into the time-slicing service mode when it is identified that the user queue is in a long queue state, wherein the time-slicing service mode provides service with a specific number of times of business services to the user currently in operation of the self-service terminal. Therefore, the difference between the service interrupting signal generating module 20 in the present embodiment and the service interrupting signal generating module 20 provided in the first embodiment is that: the service interrupting signal generating module 20 provided in the first embodiment includes the service clock start-up unit 21a for counting the service time, and only when the clock detecting unit detects that the service time is greater than or equal to the specific time will a service interrupting signal be sent to control the self-service terminal to eject the bank card of the user currently in operation so as to end the transaction; however, the service interrupting signal generating module 20 in the present embodiment includes the business counting starting unit 21b for counting the number of times of businesses, only when the business number of times detecting unit detects that the number of times of businesses is equal to the specific number of times will a service interrupting signal be sent to control the self-service terminal to eject the bank card of the user currently in operation so as to end the transaction. The specific operation process in the present embodiment is substantially the same as that of the first embodiment, which will not be described in detail herein.

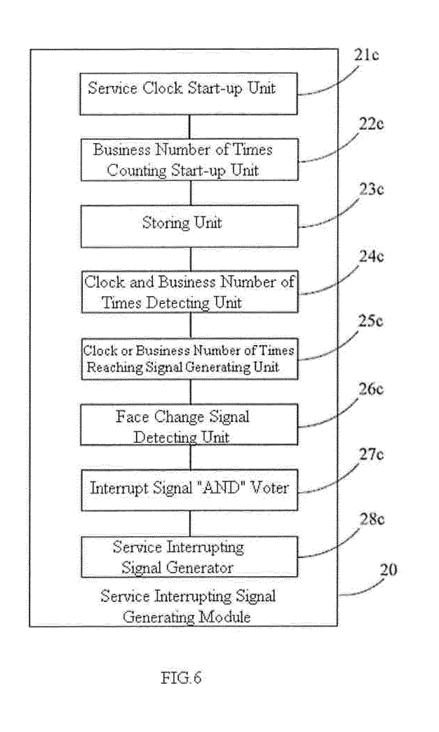

Referring to Figure 6, Figure 6 is a schematically structural diagram of a third embodiment of the service interrupting signal generating module provided by the invention. The service interrupting signal generating module 20 includes:
a service clock start-up unit 21c, configured to, after entering the time-slicing service mode, start up the time-slicing service clock to start counting the service time ;
a business number of times counting start-up unit 22c, configured to, when entering the time-slicing service mode, start up the time-slicing service number of times counting to start counting the number of times of businesses;
a storing unit 23c, configured to store the values set for the specific time and the specific number of times of the business services;
a clock and business number of times detecting unit 24c, configured to detect the service time in the service clock start-up unit and the business number of times in the business number of times counting start-up unit every time when execution of a business is completed in the self-service terminal;
a clock or business number of times reaching signal generating unit 25c, configured to send a service interrupting signal to control the self-service terminal to eject the bank card of the user currently in operation so as to end the transaction when the clock and business number of times detecting unit detects that the number of times of businesses is equal to the specific number of times or that the service time is greater than or equal to the specific time; and
a face change signal detecting unit 26c, configured to, before reaching the specific time and the specific number of times, send respectively a re-timing signal and a re-counting signal to the service clock start-up unit and the business number of times counting start-up unit periodically, or at the time when card insertion to the self-service terminal is detected and the user currently in operation of the self-service terminal is detected and identified to be different from the user in operation detected last time; and configured to, after the transaction ends, send respectively a re-timing signal and a re-counting signal to the service clock start-up unit and the business number of times counting start-up unit periodically, or at the time when card insertion to the self-service terminal is detected and the user currently in operation of the self-service terminal is detected and identified to be different from the user in operation detected last time, otherwise send a refusing signal to the self-service terminal to refuse accepting the bank card of the user currently in operation.

Wherein, the structural frame of the face change signal detecting unit 26c is substantially the same as that of the face change signal detecting unit 25a in the above embodiment.

In addition, in specific implementation, the service interrupting signal generating module provided by the invention can be added with a service interrupting signal generator 28c, and the service interrupting signal generator 28c is connected respectively with the time-slicing service mode switch-in unit 15, the face change signal generating unit 256 and the clock or business number of times reaching signal generating unit 25c via an interrupt signal "AND" voter 27c, therefore, the service interrupting signal is a combination result of the face change signal, the service time-division signal and the service clock reaching signal/business number of times reaching signal and is obtained by the calculation of the interrupt signal "AND" voter 28c . As for the specific implementation, reference can be made to the above two embodiments.

The self-service transaction automatic optimization service control system provided in the embodiment performs as followed: detecting the current user queue of the self-service terminal and converting the self-service terminal into the time-slicing service mode when it is identified that the user queue is in a long queue state, wherein the time-slicing service mode provides business service of specific time or service with a specific number of times to the user currently in operation of the self-service terminal. Therefore, the service interrupting signal generating module 20 of the embodiment includes a service clock start-up unit 21c and a business number of times counting start-up unit 22c, so as to count the service time and the number of times of businesses at the same time, when any of the above conditions is detected (when the service time is greater than or equal to the specific time or the number of times of businesses is equal to the specific number of times), a service interrupting signal is sent to control the self-service terminal to eject the bank card of the user currently in operation so as to end the transaction.

The self-service transaction automatic optimization service control system provided by the embodiment of the present invention performs as followed: detecting the current user queue of the self-service terminal, and can automatically perform the mode conversion of the self-service terminal between the general service mode and the time-slicing service mode according to the status of length of the queue. For example, when it is detected that the user queue is in a long queue state, the service mode of the self-service terminal is converted from the general service mode to the time-slicing service mode; after entering the time-slicing service mode, the self-service terminal service is divided relatively uniformly into multiple service sections by using the service slicing technique and based on the time or the number of times (including the number of times of business cycles and the number of times of user card cycles), and business service of specific time or/and specific number of times is/are set for the user currently in operation of the self-service terminal; when reaching of the specific time or the specific number is detected, a service interrupting signal is sent to control the self-service terminal to eject the bank card of the user currently in operation, so as to end the transaction. Firstly, quantization control and management are executed technically, and the control and management of the self-service terminal service can be achieved according to the change of the service environment; secondly, automatic pre-estimation and identification of the service requirements in the service environment by the self-service terminal system is achieved, and standardized management is made to the long queue service, thereby the foundation for the self-service terminal service automatic optimization technique is laid; and estimation is made to the matching between the service requirement of the self-service terminal and service recourses of the self-service terminal itself, thereby the efficient allocation of resources is enabled.

It should be appreciated by those skilled in the art that, all or a part of processes in the implementation of the above embodiments can be implemented by instructing related hardware through a computer program, the program can be stored in a computer-readable storage medium, when the program is executed, the processes in the embodiments of the above methods can be included. Wherein, the storage medium may be magnetic disk, optical disk, Read-only Memory (ROM), or Random Access Memory (RAM) or the like.

The preferred embodiments of the invention have been described above, and it should be noted that, numerous variations and modifications can be made to the embodiments of the invention by those skilled in the art without departing from the principle of the invention, and these variations and modifications should be construed as falling into the scope of protection of the invention.

## Claims

1. A self-service transaction automatic optimization service control system, comprising:
a time-slicing service mode generating module, configured to detect a current user queue of a self-service terminal, identify whether the user queue is in a long queue state, convert the self-service terminal from a general service mode to a time-slicing service mode if the user queue is in a long queue state, otherwise maintain the self-service terminal in the general service mode; wherein the time-slicing service mode provides business service of specific time or/and specific number of times to a user currently in operation of the self-service terminal;
a service interrupting signal generating module, configured to detect whether the specific time or the specific number of times set in the time-slicing service mode is reached, and send a service interrupting signal if it is reached; and
a self-service terminal control module, configured to detect and receive the service interrupting signal, and control, according to the service interrupting signal, the self-service terminal to eject the bank card of the user currently in operation so as to end the transaction.

2. The self-service transaction automatic optimization service control system according to claim 1, wherein the time-slicing service mode generating module comprises:
a queue image collecting unit, configured to periodically collect, from a camera video, a frame of image about the current user queue of the self-service terminal;
a queue image pre-processing unit, configured to perform definition filtering processing to the collected image;
a queue image detecting and extracting unit, configured to perform feature extraction to a feature region of the image obtained after the definition filtering processing, for extracting a user queue image;
a queue image identifying and judging unit, configured to identify the extracted user queue image, estimate length of the queue in the user queue image, and judge that the queue is in a long queue state when the length of the queue is greater than or equal to 3; and
a time-slicing service mode switch-in unit, configured to convert the self-service terminal from the general service mode to the time-slicing service mode if the queue image identifying and judging unit judges that the queue is in the long queue state, otherwise maintain the self-service terminal in the general service mode.

3. The self-service transaction automatic optimization service control system according to claim 1, wherein the service interrupting signal generating module comprises:
a service clock start-up unit, configured to, when entering the time-slicing service mode, start up a time-slicing service clock to start counting the service time;
a storing unit, configured to store the value set for the specific time of service;
a clock detecting unit, configured to detect the service time in the service clock start-up unit every time when execution of a business is completed in the self-service terminal; and
a service clock reaching signal generating unit, configured to send the service interrupting signal to control the self-service terminal to eject the bank card of the user currently in operation so as to end the transaction when the clock detecting unit detects that the service time is greater than or equal to the value of the specific time.

4. The self-service transaction automatic optimization service control system according to claim 3, wherein the service interrupting signal generating module further comprises:
a face change signal detecting unit, configured to, before reaching the specific time, send a re-timing signal to the service clock start-up unit periodically, or at the time when card insertion to the self-service terminal is detected and the user currently in operation of the self-service terminal is detected and identified to be different from the user in operation detected last time; and
configured to, after the transaction ends, send a re-timing signal to the service clock start-up unit when card insertion to the self-service terminal is detected and the user currently in operation of the self-service terminal is detected and identified to be different from the user in operation detected last time, otherwise send a refusing signal to the self-service terminal to refuse accepting the bank card of the user currently in operation.

5. The self-service transaction automatic optimization service control system according to claim 1, wherein the service interrupting signal generating module comprises:
a business number of times counting start-up unit, configured to, when entering the time-slicing service mode, start up the time-slicing service number of times counting to start counting the number of times of businesses;
a storing unit, configured to store the value set for the specific number of times of businesses service;
a business number of times detecting unit, configured to detect the number of times of businesses in the business number of times counting start-up unit every time when execution of a business is completed in the self-service terminal; and
a business number reaching signal generating unit, configured to send the service interrupting signal to control the self-service terminal to eject the bank card of the user currently in operation so as to end the transaction when the business number of times detecting unit detects that the number of times of businesses is equal to the specific number of times.

6. The self-service transaction automatic optimization service control system according to claim 5, wherein the service interrupting signal generating module further comprises:
a face change signal detecting unit, configured to, before reaching the specific number of times, send a re-counting signal to the business number of times counting start-up unit periodically, or at the time when card insertion to the self-service terminal is detected and the user currently in operation of the self-service terminal is detected and identified to be different from the user in operation detected last time; and
configured to, after the transaction ends, send a re-counting signal to the business number of times counting start-up unit when card insertion to the self-service terminal is detected and the user currently in operation of the self-service terminal is detected and identified to be different from the user in operation detected last time, otherwise send a refusing signal to the self-service terminal to refuse accepting the bank card of the user currently in operation.

7. The self-service transaction automatic optimization service control system according to claim 1, wherein the service interrupting signal generating module comprises:
a service clock start-up unit, configured to, when entering the time-slicing service mode, start up a time-slicing service clock to start counting the service time;
a business number of times counting start-up unit, configured to, when entering the time-slicing service mode, start up the time-slicing service number of times counting to start counting the number of times of businesses;
a storing unit, configured to store the values set for the specific time and the specific number of times of business services;
a clock and business number of times detecting unit, configured to detect the service time in the service clock start-up unit and the number of times of businesses in the business number of times counting start-up unit every time when execution of a business is completed in the self-service terminal; and
a clock or business number of times reaching signal generating unit, configured to send the service interrupting signal to control the self-service terminal to eject the bank card of the user currently in operation so as to end the transaction when the clock and business number of times detecting unit detects that the number of times of businesses is equal to the specific number of times or that the service time is greater than or equal to the specific time.

8. The self-service transaction automatic optimization service control system according to claim 7, wherein the service interrupting signal generating module further comprises:
a face change signal detecting unit, configured to, before reaching the specific time and the specific number of times, send respectively a re-timing signal and a re-counting signal to the service clock start-up unit and the business number of times counting start-up unit periodically, or at the time when card insertion to the self-service terminal is detected and the user currently in operation of the self-service terminal is detected and identified to be different from the user in operation detected last time; and
configured to, after the transaction ends, send respectively a re-timing signal and a re-counting signal to the service clock start-up unit and the business number of times counting start-up unit when card insertion to the self-service terminal is detected and the user currently in operation of the self-service terminal is detected and identified to be different from the user in operation detected last time, otherwise send a refusing signal to the self-service terminal to refuse accepting the bank card of the user currently in operation.

9. The self-service transaction automatic optimization service control system according to claim 4, 6 or 8, wherein the face change signal detecting unit comprises:
an user in operation image collecting unit, configured to collect, from a camera video, an image about the user currently in operation of the self-service terminal periodically or when a card is insertion to the self-service terminal is detected;
an image pre-processing unit, configured to perform definition filtering processing on the collected image;
a face image detecting and extracting unit, configured to perform feature extraction to a feature region of the image obtained after the definition filtering processing, for extracting a face image;
a face image storing unit, configured to store the face image as a reference for comparison with an currently extracted face image;
a face image comparison unit, configured to compare the currently extracted face image of the user in operation with the face image stored the last time so as to judge whether they are the same person; and
a face change signal generating unit, configured to generate a face change signal and send the face change signal to a related unit when the face image comparison unit judges that the two users are not the same person.
